# FASCICULE DE BREVET EUROPEEN

(11) **EP 3 241 020 B1**
(45) Date de publication et mention de la délivrance du brevet: **24.03.2021**
(21) Numéro de dépôt: 15817922.6
(22) Date de dépôt: 30.12.2015
(51) Int. Cl.: G01N 29/032, F17D 5/06, G01N 29/11, G01N 29/44

(54) **PROCÉDÉ DE CONTRÔLE D'UNE LIGNE FLEXIBLE ET INSTALLATION ASSOCIÉE**
VERFAHREN ZUR PRÜFUNG EINER FLEXIBLEN LEITUNG UND ZUGEHÖRIGE INSTALLATION
METHOD OF CHECKING A FLEXIBLE LINE AND ASSOCIATED INSTALLATION

(30) Priorité: 30.12.2014 FR 1463446
(43) Date de publication de la demande: 08.11.2017
(73) Titulaire: TECHNIP N-POWER, 92400 Courbevoie (FR)
(72) Inventeur: NICOLAS, Yann, 92500 Rueil-Malmaison (FR); LEMBEYE, Philippe, 76380 Montigny (FR)
(74) Mandataire: Lavoix
(86) Numéro de dépôt international: PCT/EP2015/081429
(87) Numéro de publication internationale: WO 2016/107909

(56) Documents cités:
- FR-A1- 2 835 317
- GB-A- 2 446 670
- GB-A- 2 495 406
- JP-A- H04 323 555
- JP-A- 2000 221 173
- US-A- 3 576 126
- US-A1- 2013 125 655

## Description

La présente invention concerne un procédé de contrôle d'une ligne flexible comprenant au moins une couche d'armures entourée d'une gaine externe, la gaine externe délimitant un espace interne recevant la couche d'armures et comprenant au moins un milieu à l'interface entre la gaine externe et l'espace interne, le procédé comprenant :
- l'envoi d'un signal ultrasonore depuis l'extérieur de la gaine externe sur une région à contrôler de la gaine externe, et
- la réception du signal réfléchi à l'interface entre la région à contrôler de la gaine externe et l'espace interne en regard de la région à contrôler de la gaine externe.

L'invention concerne également une installation de contrôle d'une ligne flexible.

En particulier, le procédé est destiné à détecter une inondation de l'espace présent à l'intérieur de la gaine externe, notamment une inondation des couches d'armures de traction présentes dans la ligne flexible.

La ligne flexible est avantageusement une conduite flexible de type non liée (« unbonded » en anglais) destinée au transport d'hydrocarbures à travers une étendue d'eau, tel qu'un océan, une mer, un lac ou une rivière. En variante, la ligne flexible est un ombilical renforcé par des éléments d'armure ou encore un câble.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant ou fixe, destiné à collecter et à distribuer le fluide. L'ensemble de surface peut être une plateforme semi-submersible, un FPSO ou un autre ensemble flottant.

Les conduites destinées aux grandes profondeurs doivent aussi résister aux très fortes tensions, couramment plusieurs dizaines de tonnes, auxquelles elles sont soumises en service et/ou lors de leur installation en mer.

En outre, dans le cas où l'ensemble de surface est flottant et mobile en fonction des conditions de mer, les conduites montantes (« risers » en anglais) reliant le fond marin à l'ensemble de surface peuvent parfois être soumises à des millions de cycles de variation de courbure. Ces conduites montantes doivent donc aussi être capables de résister durablement à des sollicitations dynamiques en fatigue.

Pour garantir une telle tenue en tension pendant toute la durée de vie de la conduite, il est nécessaire de s'assurer de l'intégrité des couches d'armures de traction, généralement réalisées à partir d'enroulement hélicoïdaux de fils métalliques. En particulier, les couches d'armures sont dans certains cas sensibles à la corrosion. La corrosion peut être induite par la perméation de composés acides présents dans le fluide transporté et/ou par la présence d'eau dans l'espace recevant les couches d'armures.

La présence d'eau peut apparaitre notamment lors d'une faille ou d'une rupture de la gaine externe qui n'assure alors plus sa fonction de protection de la conduite.

Pour détecter d'éventuelles failles ou ruptures de la gaine externe conduisant à des inondations de l'espace interne, différents tests sont mis en œuvre, tel que le test annulaire. Le test annulaire consiste à mesurer le volume courant de gaz de l'annulaire de la conduite flexible par exemple en faisant le vide dans l'annulaire. Le volume courant de gaz mesuré est comparé au volume initial de l'annulaire pour en déduire si de l'eau a envahi partiellement ou totalement l'annulaire. Cependant, une telle mesure de volume est souvent peu précise et ne permet donc pas de statuer sur la présence et la hauteur d'éventuelles zones inondées menaçant l'intégrité de la conduite flexible.

GB-B-2 446 670 décrit une méthode d'inspection sous-marine de l'intégrité de l'annulaire d'une conduite flexible basée sur la technique de l'échographie ultrasonore. Selon cette méthode, une sonde ultrasonore émet une onde ultrasonore qui pénètre dans la conduite. En retour, la sonde reçoit les ondes ultrasonores réfléchies aux discontinuités, c'est-à-dire aux interfaces, rencontrées dans la conduite. Les amplitudes des ondes réfléchies permettent, notamment, de déterminer si la portion de la conduite inspectée est inondée.

Une telle méthode se base sur une propriété des ultrasons selon laquelle les ultrasons se propagent peu dans un gaz par opposition à un milieu liquide tel que l'eau.

Cependant, une telle propriété n'est pas vérifiée dans un milieu soumis à une pression externe. En effet, à partir d'un certain niveau de pression entre deux matériaux, les ultrasons se propagent en l'absence de milieu de couplage tel qu'un liquide. Par exemple, à partir de quelques dizaines de bars de pression de contact, des ultrasons se propagent entre une gaine thermoplastique et une couche métallique sans milieu de couplage.

La pression de couplage entre la gaine externe et les éléments d'armures dépend principalement de la pression interne de la conduite flexible et de la pression hydrostatique. La pression de couplage varie donc en fonction de la profondeur à laquelle la mesure est effectuée.

Ainsi, lorsque la pression de contact entre la gaine externe et les éléments d'armures est supérieure à quelques dizaines de bars, la méthode d'inspection présentée dans le brevet GB-B-2 446 670 ne permet pas de faire la distinction entre un annulaire inondé et un annulaire sec.

On connaît aussi par la demande de brevet US-A-2013/0125655 un procédé pour déterminer la position d'une interface entre deux couches d'une gaine d'étanchéité interne d'une ligne flexible. Un signal ultrasonore est émis dans ladite gaine et la polarité du signal ultrasonore réfléchi à l'interface est analysée.

De plus, la demande de brevet US-A-3576126 divulgue un procédé de détection de la présence d'air entre deux surfaces d'un joint par l'analyse de la polarité d'un signal ultrasonore réfléchi.

Un but de l'invention est de fournir un procédé de contrôle de l'intégrité d'une conduite flexible, en particulier de l'annulaire de la conduite flexible, qui soit non intrusif, simple à mettre en œuvre et fiable quelle que soit la pression extérieure appliquée à la conduite flexible.

A cet effet, l'invention a pour objet un procédé du type précité, comprenant, en outre, l'analyse de la polarité du signal réfléchi à l'interface et la détermination, en fonction de la polarité analysée, d'au moins la nature du milieu à l'interface.

Le procédé selon l'invention peut comprendre l'une ou plusieurs des caractéristiques suivantes, prises isolément ou suivant toute combinaison techniquement possible :
- lors de l'étape d'analyse, le signal réfléchi est non redressé.
- le procédé comporte, en outre, le balayage d'une pluralité de régions à contrôler successives de la gaine externe et la répétition, pour chaque région à contrôler de la gaine externe, des étapes d'envoi, de réception, d'analyse et de détermination du milieu à l'interface entre la région à contrôler de la gaine externe et l'espace interne en regard de la région à contrôler de la gaine externe.
- le pas de balayage est compris entre 0 millimètre et 10 millimètres et avantageusement entre 0 millimètre et 2 millimètres.
- le balayage est effectué axialement le long de la ligne flexible et/ou angulairement autour de la ligne flexible.
- le balayage est effectué en utilisant une sonde envoyant le signal ultrasonore portée par un support mobile de déplacement de la sonde.
- le support mobile est un manipulateur motorisé fixé autour de la ligne flexible à l'aide d'un robot sous-marin de la conduite, un manipulateur mobile apte à se déplacer le long de la conduite et/ou un support mobile propre à être saisi par la main d'un plongeur.
- le signal ultrasonore envoyé présente une fréquence centrale choisie entre 1,5 MHz et 5 MHz, préférentiellement entre 2 MHz et 2,5 MHz.
- le signal ultrasonore est envoyé sous forme d'un faisceau ultrasonore focalisé.
- le signal ultrasonore est envoyé et réceptionné par un capteur piézo-électrique.
- lors de l'étape de détermination, le signal réfléchi est comparé à une base de données de signaux ultrasonores.
- la ligne flexible comporte une couche intermédiaire entre la gaine externe et la couche d'armures.
- le milieu est un liquide, un gaz ou un solide.
- le procédé est mis en œuvre lors de l'utilisation de la ligne flexible, en particulier lors du passage d'un fluide à travers un passage central de la ligne flexible.
- la gaine externe est immergée dans une étendue d'eau, l'envoi du signal ultrasonore étant effectué à l'aide d'une sonde orientée vers la surface externe de la gaine externe.

L'invention a également pour objet une installation de contrôle d'une ligne flexible selon la revendication 15.

L'invention sera mieux comprise à la lecture de la description qui va suivre donnée uniquement à titre d'exemple, et faite en se référant aux dessins annexés, sur lesquels :
- la figure 1 est une vue en perspective partiellement écorchée d'un tronçon central d'une première conduite flexible contrôlée à l'aide d'un procédé selon l'invention, la conduite flexible comprenant une gaine externe ;
- la figure 2 est une vue partielle, prise en coupe suivant un plan axial médian, de couches pertinentes de la conduite flexible et d'une installation de contrôle selon l'invention ;
- la figure 3 est un organigramme d'un exemple de mise en œuvre d'un procédé de contrôle selon l'invention ;
- la figure 4 est un graphique représentant un signal ultrasonore incident et un signal ultrasonore réfléchi à l'interface entre la gaine externe de la figure 1 et l'air ;
- la figure 5 est un graphique représentant un signal ultrasonore incident et un signal ultrasonore réfléchi à l'interface entre la gaine externe de la figure 1 et l'eau, et
- la figure 6 est un graphique représentant un signal ultrasonore incident et un signal ultrasonore réfléchi à l'interface entre la gaine externe de la figure 1 et un matériau en acier.

Dans tout ce qui suit, les termes « extérieur » et « intérieur » s'entendent généralement de manière radiale par rapport à un axe X-X' de la conduite, le terme « extérieur » s'entendant comme relativement plus éloigné radialement de l'axe X-X' et le terme « intérieur » s'étendant comme relativement plus proche radialement de l'axe X-X' de la conduite.

Les termes « avant » et « arrière » s'entendent de manière axiale par rapport à un axe X-X' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

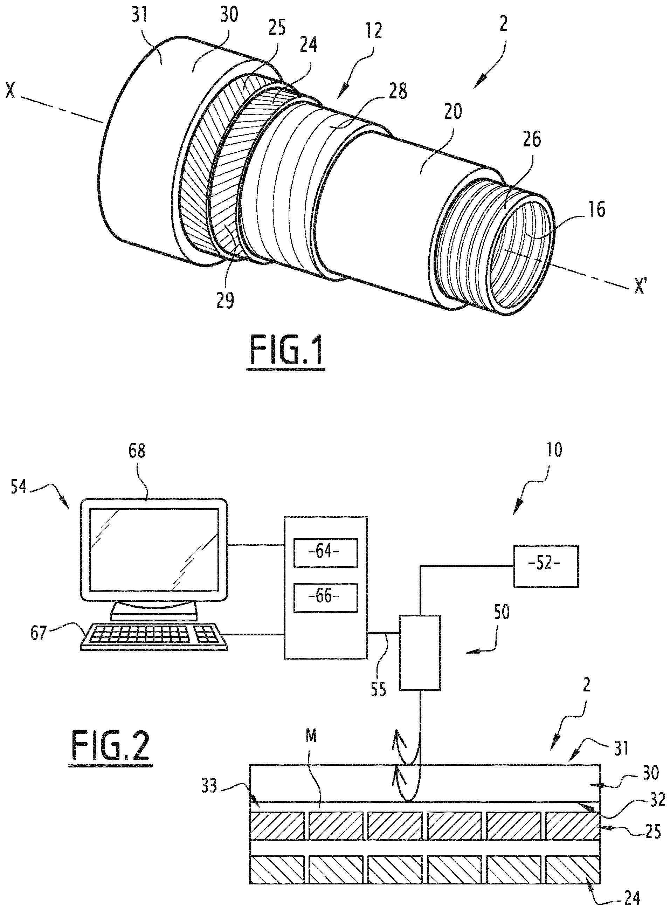

La figure 1 illustre partiellement une ligne flexible 2. La figure 2 illustre une installation 10 selon l'invention de contrôle de la ligne flexible 2 de la figure 1.

Dans l'exemple décrit ci-après, la ligne flexible 2 est une conduite flexible. En variante, la ligne flexible 2 est un câble ou un ombilical.

La conduite flexible 2 comporte un tronçon central 12 illustré en partie sur la figure 1. La conduite 2 délimite un passage central 16 de circulation d'un fluide, avantageusement d'un fluide pétrolier. Le passage central 16 s'étend suivant un axe X-X', entre l'extrémité amont et l'extrémité aval de la conduite 2.

La conduite flexible 2 est destinée à être disposée à travers une étendue d'eau (non représentée) dans une installation d'exploitation de fluide, notamment d'hydrocarbures. L'étendue d'eau est par exemple, une mer, un lac ou un océan. La profondeur de l'étendue d'eau au droit de l'installation d'exploitation de fluides est, par exemple, comprise entre 100 mètres (m) et 3000 mètres.

L'installation d'exploitation de fluide comporte un ensemble de surface notamment flottant et un ensemble de fond (non représentés) qui sont généralement raccordés entre eux par la conduite flexible 2.

La conduite flexible 2 est de préférence une conduite « non liée » (désignée par le terme anglais « unbonded »).

Au moins deux couches adjacentes de la conduite flexible 2 sont libres de se déplacer longitudinalement l'une par rapport à l'autre lors d'une flexion de la conduite 2.

Avantageusement, toutes les couches de la conduite flexible 2 sont libres de se déplacer l'une par rapport à l'autre. Une telle conduite 2 est par exemple décrite dans les documents normatifs publiés par l'American Petroleum Institute (API), API 17J, et API RP17B.

Comme illustré par la figure 1, la conduite 2 délimite une pluralité de couches concentriques autour de l'axe X-X', qui s'étendent continûment le long du tronçon central 12.

La conduite 2 comporte, par exemple, au moins une première gaine tubulaire 20 à base de matériau polymère constituant avantageusement une gaine de pression.

La conduite 2 comporte, en outre, au moins une couche d'armures de traction 24, 25 disposée extérieurement par rapport à la première gaine 20 formant une gaine de pression.

Dans cet exemple, la conduite 2 comporte, en outre, une carcasse interne 26 disposée à l'intérieur de la gaine de pression 20, une voûte de pression 28 intercalée entre la gaine de pression 20 et la ou les couches d'armures de traction 24, 25 et une gaine externe 30, destinée à la protection de la conduite 2.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La carcasse 26 est formée par exemple d'un feuillard métallique profilé, enroulé en spirale. Les spires du feuillard sont avantageusement agrafées les unes aux autres. La fonction principale de la carcasse 26 est de reprendre les efforts radiaux d'écrasement.

La carcasse 26 est, par exemple, totalement métallique.

Dans cet exemple, la carcasse 26 est disposée à l'intérieur de la gaine de pression 20. La conduite 2 est alors désignée par le terme anglais « rough bore » en raison de la géométrie de la carcasse 26.

La carcasse 26 est propre à entrer en contact avec le fluide circulant dans la gaine de pression 20.

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

En variante, la conduite flexible 2 est dépourvue de carcasse interne 26. La conduite flexible 2 est alors désignée par le terme anglais « smooth bore ».

Dans cet exemple, la voûte de pression 28 est destinée à reprendre les efforts liés à la pression régnant à l'intérieur de la gaine de pression 20. Elle est par exemple formée d'un fil profilé métallique entouré en hélice autour de la gaine 20. Le fil profilé présente généralement une géométrie complexe, notamment en forme de Z, de T, de U, de K, de X ou de I.

La voûte de pression 28 est enroulée en hélice à pas court autour de la gaine de pression 20, c'est-à-dire avec un angle d'hélice de valeur absolue proche de 90°, typiquement compris entre 75° et 90°.

La conduite flexible 2 selon l'invention comprend au moins une couche d'armures 24, 25 formée d'un enroulement hélicoïdal d'au moins un élément d'armure 29 allongé.

Dans l'exemple représenté sur la figure 1, la conduite flexible 2 comporte deux couches d'armures 24, 25, notamment une couche d'armures intérieure 24, appliquée sur la voûte de pression 28 et une couche d'armures extérieure 25 autour de laquelle est disposée la gaine extérieure 30.

Chaque couche d'armures 24, 25 comporte des éléments d'armure 29 longitudinaux enroulés à pas long autour de l'axe X-X' de la conduite 2.

Par « enroulé à pas long », on entend que la valeur absolue de l'angle d'hélice est inférieure à 60°, et est typiquement comprise entre 25° et 55°.

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, α étant compris entre 25° et 55°, l'angle d'enroulement des éléments d'armure 29 de la deuxième couche d'armures 25 disposée au contact de la première couche d'armures 24 est par exemple égal à - α°.

Les éléments d'armure 29 sont par exemple formés par des fils métalliques, notamment des fils en acier, ou par des rubans en matériau composite, par exemple des rubans renforcés de fibres de carbone.

La gaine externe 30 est destinée à empêcher la perméation de fluide depuis l'extérieur de la conduite flexible 2 vers l'intérieur. Elle est avantageusement réalisée en matériau polymère, notamment à base d'un polyoléfine, tel que du polyéthylène, ou à base d'un polyamide, tel que du PA11 ou du PA12

Comme visible sur la figure 2, la gaine externe 30 comprend une surface externe 31 orientée vers l'extérieur de la conduite flexible 2 et une surface interne 32 orientée vers l'intérieur de la conduite flexible 2 et donc vers la deuxième couche d'armures 25.

L'épaisseur de la gaine externe 30 est par exemple comprise entre 5 mm et 15 mm.

Comme visible sur la figure 2, l'espace interne situé entre la gaine externe 30 et la gaine de pression 20 est appelé espace annulaire 33. L'espace annulaire 33 comprend au moins un milieu M. L'un des buts de la présente invention est de contrôler l'intégrité de l'espace annulaire 33 de la conduite flexible 2 en déterminant, notamment, le ou les milieux M présents dans l'espace annulaire 33 notamment à l'interstice entre la gaine externe 30 et les couches d'armures 24, 25 . Les milieux M sont, par exemple, choisis parmi un liquide tel que l'eau, un gaz tel que l'air et un solide en l'absence d'interstice. Par exemple, lorsque l'un des milieux M présent dans l'espace annulaire 33 est de l'eau, l'espace annulaire 33 est considéré inondé.

Comme illustré sur la figure 2, l'installation 10 de contrôle selon l'invention comprend une sonde 50, un support mobile 52 de déplacement de la sonde 50 et un calculateur 54.

La sonde 50 est une sonde ultrasonore configurée pour envoyer et recevoir des ondes ultrasonores.

La sonde 50 est connectée au calculateur 54, par exemple, via un câble de connexion 55.

La sonde 50 comprend, notamment, un traducteur ultrasonore.

Le traducteur ultrasonore est propre à générer un signal ultrasonore de fréquence centrale comprise entre 1,5 Mégahertz (MHz) et 5 MHz, préférentiellement entre 2 MHz et 2,5 MHz.

Le traducteur ultrasonore est avantageusement focalisé. La focalisation peut être obtenue par des lentilles ultrasonores, par des miroirs de formes convenables, par la mise en forme du traducteur piézo-électrique, notamment s'il s'agit d'un traducteur ultrasonore de type piézocomposite, ou par une mosaïque de traducteurs élémentaires déphasés électroniquement (en anglais « phased array »).

Le traducteur ultrasonore est, par exemple, un capteur piézo-électrique.

Le support mobile 52 est configuré pour transporter et déplacer la sonde 50 sur la conduite flexible 2 de sorte que la sonde 50 balaye plusieurs régions successives de la conduite flexible 2.

Le support mobile 52 est, par exemple, un manipulateur motorisé fixé autour de la conduite flexible 2 à l'aide d'un robot sous-marin, notamment un véhicule télécommandé (« Remotely Operated Vehicle » ou « ROV » en anglais). Ce robot sous-marin est utilisé pour fixer, déplacer et retirer le manipulateur, ainsi que pour transmettre les signaux vers la surface. En variante, le manipulateur motorisé est apte à se déplacer le long de la conduite 2 par ses propres moyens.

Selon un autre mode de réalisation, le support mobile 52 est propre à être saisi par la main d'un plongeur pour être déplacé.

Le support mobile 52 est propre à déplacer la sonde 50 longitudinalement le long de la conduite 2 pour effectuer des mesures successives de régions à contrôler de la conduite flexible 2. Avantageusement, le support mobile 52 est propre à déplacer la sonde 50 autour de l'axe X-X' de la conduite 2 pour effectuer des mesures angulaires de la nature du milieu M dans les régions à contrôler.

Le pas de balayage du support mobile 52 est, par exemple, compris entre 0 millimètre (mm) et 100 mm, avantageusement entre 0 mm et 10 mm, préférentiellement entre 0 mm et 2 mm.

Le calculateur 54 est propre à représenter les signaux réfléchis mesurés par le traducteur ultrasonore en vue A-scan, B-scan ou encore C-scan.

Une vue A-scan est une représentation de l'amplitude des signaux réfléchis en fonction du temps. Une vue A-scan correspond à une position fixe du traducteur par rapport à la pièce contrôlée, et représente les différents échos ultrasonores en fonction du temps.

Une vue B-scan fournit une représentation sous forme d'image d'une coupe transversale de la pièce contrôlée. Une vue B-scan est obtenue soit en déplaçant un traducteur ultrasonore mono-élément le long d'une ligne parallèle à la surface de la pièce contrôlée (balayage mécanique de la pièce contrôlée), soit en utilisant un traducteur ultrasonore multiéléments dans lequel les éléments sont alignés sous forme de barrette linéaire et peuvent être interrogés séquentiellement via un dispositif de multiplexage (balayage électronique de la pièce contrôlée). La première dimension de cette image correspond au temps de parcours de l'onde ultrasonore. La deuxième dimension de cette image correspond à l'amplitude du déplacement mécanique ou électronique du faisceau ultrasonore parallèlement à la surface de la pièce. Chaque pixel est codé en couleur ou en niveau de gris en fonction de l'amplitude du signal réfléchi au point correspondant. Une vue B-scan est en fait une juxtaposition de vues A-scan dans lesquelles les amplitudes des signaux réfléchis sont codés en couleur ou en niveau de gris.

Une vue C-scan fournit une représentation sous forme d'image d'une vue de dessus de la pièce inspectée. Une vue C-scan est obtenue soit en déplaçant un traducteur mono-élément selon deux axes perpendiculaires l'un à l'autre et parallèles à la surface de la pièce à contrôler (double balayage mécanique), soit en déplaçant un traducteur linéaire multiéléments (combinaison d'un balayage mécanique et d'un balayage électronique), soit en utilisant un capteur matriciel multiéléments immobile (double balayage électronique). Les deux dimensions de cette image correspondent aux amplitudes des déplacements mécaniques et/ou électroniques du faisceau ultrasonore selon les deux axes perpendiculaires entre eux et parallèles à la surface de la pièce contrôlée. Chaque pixel de cette image correspond donc à une position particulière du faisceau ultrasonore par rapport à la pièce contrôlée. Le signal réfléchi correspondant à ce pixel est donc traité pour être codé en couleur ou en niveau de gris. Un traitement classique consiste à rechercher le plus grand écho réfléchi dans la pièce contrôlée, à mesurer l'amplitude de ce plus grand écho, à coder cette amplitude en couleur ou en niveau de gris et à représenter le pixel correspondant selon ce codage. D'autres traitements sont possibles, par exemple un traitement consistant à coder la couleur ou le niveau de gris de chaque pixel en fonction du temps de parcours correspondant à l'écho de plus grande amplitude réfléchi par la pièce.

Le calculateur 54 est, par exemple, un ordinateur comportant une unité de traitement de données 64 et une mémoire 66, ainsi qu'optionnellement un clavier 67 et une unité d'affichage 68.

Le calculateur 54 est avantageusement embarqué sur le robot sous-marin connecté au manipulateur motorisé de façon à limiter la longueur de câble entre la sonde 50 et le calculateur 54, pour ne pas dégrader la transmission des signaux analogiques haute fréquence envoyés par la sonde 50. Le calculateur 54 est propre à traiter en temps réel ces signaux analogiques et à renvoyer le résultat de ce traitement sous forme de signaux numériques. Ces signaux numériques peuvent être transmis sur une grande distance jusqu'à l'installation de surface, c'est-à-dire en surface de l'étendue d'eau dans laquelle est généralement immergée la conduite flexible 2, par l'intermédiaire du robot sous-marin et d'un câble ombilical reliant le robot sous-marin à la surface.

L'unité de traitement de données 64 est configurée pour analyser la polarité des signaux réfléchis à l'interface entre la gaine externe 30 et l'espace annulaire 33 en regard des régions à contrôler de la gaine externe 30.

L'unité de traitement de données 64 est, en outre, configurée pour déterminer, en fonction de la polarité analysée, au moins la nature des milieux M présents dans l'espace annulaire 33 en regard des régions à contrôler de la gaine externe 30. La nature d'un milieu M est, par exemple, l'eau, l'air ou un métal.

Une base de données de signaux ultrasonores est également stockée dans la mémoire 66 du processeur 58. La base de données comprend, notamment, des caractéristiques de signaux ultrasonores réfléchis à différentes interfaces, par exemple, entre la gaine externe 30 et de l'air, entre la gaine externe 30 et de l'eau et entre la gaine externe 30 et un métal. Les caractéristiques sont, notamment, les coefficients de réflexion aux interfaces et les polarités des signaux réfléchis par rapport aux signaux incidents.

Le coefficient de réflexion est défini comme l'amplitude d'une onde réfléchie sur l'amplitude de l'onde incidente associée, ou l'intensité de l'onde réfléchie sur l'intensité de l'onde incidente associée. La polarité du signal réfléchi par rapport au signal incident est le signe du signal réfléchi comparé au signe du signal incident.

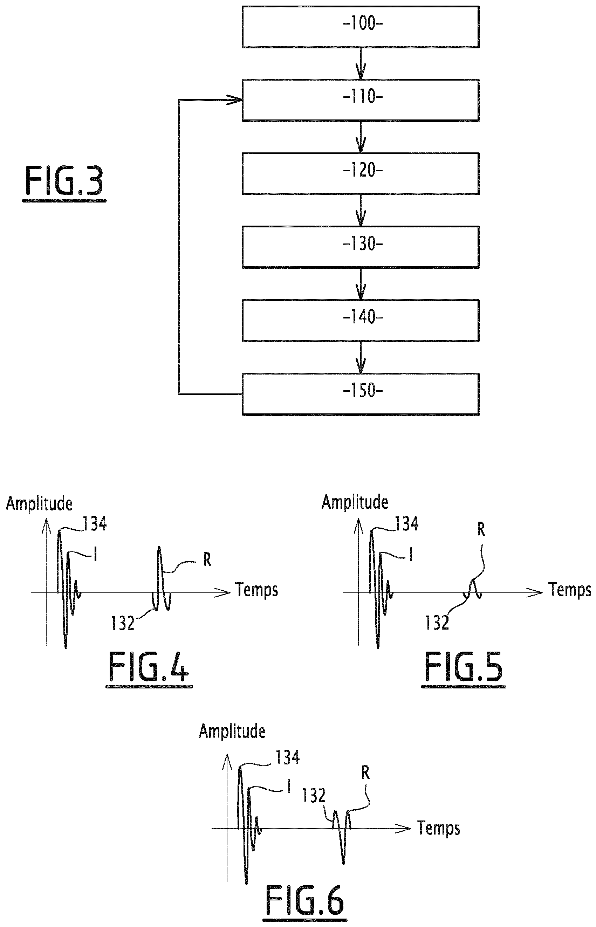

Le fonctionnement de l'installation 10 de contrôle va maintenant être décrit en référence à la figure 3, qui est un organigramme d'un exemple de mise en œuvre d'un procédé de contrôle selon l'invention.

Le procédé de contrôle comprend une première étape 100 de positionnement de la sonde 50 en regard d'une région à contrôler de la conduite flexible 2. La sonde 50 est orientée vers la surface externe 31 de la gaine externe 30.

L'étape de positionnement 100 est mise en œuvre par le support mobile 52.

Le procédé comprend, ensuite, à chaque arrêt du support mobile 52 et donc de la sonde 50, une étape 110 d'envoi d'un signal ultrasonore sur la surface externe 31 de la gaine externe 30. Le signal ultrasonore est envoyé sur une région à contrôler de la gaine externe 30 depuis l'extérieur de la gaine externe 30.

Le signal ultrasonore étant focalisé sur la gaine externe 30, une région de la gaine externe 30 est délimitée, notamment, par la tâche de focalisation formée par le faisceau ultrasonore incident sur la gaine externe 30.

La fréquence centrale des ultrasons est comprise entre 1,5 MHz et 5 MHz, préférentiellement entre 2 MHz et 2,5 MHz.

L'étape d'envoi 110 est mise en œuvre par la sonde 50.

Le procédé comprend, ensuite, une étape 120 de réception des signaux ultrasonores réfléchis aux différentes interfaces rencontrées par le signal. Une interface est définie comme une surface entre deux milieux. Ainsi, la première interface rencontrée par le signal ultrasonore incident est l'interface entre l'eau et la gaine externe 30 lorsque la conduite flexible 2 est disposée dans une étendue d'eau. La deuxième interface est l'interface entre la gaine externe 30 et l'espace annulaire 33 en regard de la région à contrôler de la gaine externe 30. La troisième interface éventuelle est l'interface entre l'espace annulaire 33 en regard de la région à contrôler de la gaine externe 30 et la deuxième couche d'armures 25 en regard de la région à contrôler de la gaine externe 30.

Il est illustré sur les figures 4 à 6, différents signaux réfléchis aux interfaces entre la surface interne 32 de la gaine externe 30 et l'espace annulaire 33 situé en regard de la région à contrôler de la gaine externe 30 lorsque l'espace annulaire 33 comprend différents milieux M.

Les signaux réceptionnés sont, ensuite, transmis au calculateur 54 via le câble de connexion 55.

L'étape de réception 120 est mise en œuvre par la sonde 50.

Le procédé comprend, ensuite, une étape 130 d'analyse des signaux réfléchis.

L'étape d'analyse 130 comprend une première phase de détermination du signal à l'interface entre la surface interne 32 de la gaine externe 30 et le milieu M de l'annulaire faisant face à la région à contrôler de la gaine externe 30, parmi l'ensemble des signaux réfléchis. La première phase consiste à comparer les temps de vol associés aux différents signaux réfléchis. Le temps de vol d'un signal réfléchi est, en effet, la durée séparant l'émission d'un signal incident de la réception du signal réfléchi. Les signaux réfléchis sont alors classés par ordre d'arrivée, ce qui permet de déduire le signal réfléchi à la deuxième interface, c'est-à-dire à l'interface entre la surface interne 32 de la gaine externe 30 et le l'espace annulaire 33 en regard de la région à contrôler de la gaine externe 30.

L'étape d'analyse 130 comprend, ensuite, une phase de détermination de l'amplitude du signal réfléchi à la deuxième interface et de calcul du rapport des amplitudes entre le signal réfléchi et le signal incident. Le rapport des amplitudes calculé est le coefficient de réflexion de l'onde ultrasonore pour la deuxième interface.

L'étape d'analyse 130 comprend, ensuite, une phase de détermination de la polarité du signal réfléchi R à la deuxième interface par rapport à la polarité du signal incident I. En référence à la figure 4 ou à la figure 5, lorsque le premier pic 132 du signal réfléchi R est de signe opposé au signe du premier pic 134 du signal incident I, la polarité du signal réfléchi R est dite inversée par rapport à la polarité du signal incident I. En référence à la figure 6, lorsque le premier pic 132 du signal réfléchi R est de même signe que le premier pic 134 du signal incident I, la polarité du signal réfléchi R est dite identique à la polarité du signal incident I.

Ainsi, la deuxième interface est définie par le coefficient de réflexion déterminé et par la polarité du signal réfléchi R par rapport au signal incident I.

Lors de l'étape d'analyse 130, le signal réfléchi analysé est non redressé, c'est-à-dire que le signal électrique renvoyé par la sonde 50 est simplement amplifié avant l'étape d'analyse, cette amplification se faisant sans modification de la forme du signal.

L'étape d'analyse 130 est mise en œuvre par l'unité de traitement 64 du calculateur 54.

Le procédé de contrôle comprend, ensuite, une étape de détermination 140 du milieu M délimitant la deuxième interface.

Au cours de cette étape de détermination 140, le signal réfléchi est comparé à la base de données de signaux ultrasonores. En particulier, le coefficient de réflexion calculé lors de l'étape d'analyse 130 est comparé aux coefficients de réflexion référencés dans la base de données et la polarité déterminée lors de l'étape d'analyse 130 est comparée aux polarités de la base de données.

Par exemple, la base de données regroupe les informations du tableau suivant :

| Interfaces | Polarité | Coefficient de réflexion | Figures de la demande |
|---|---|---|---|
| Gaine externe et air | Polarité inversée | ≥ 99 % | Figure 4 |
| Gaine externe et eau | Polarité inversée | ≤ 1 % | Figure 5 |
| Gaine externe et acier | Polarité identique | compris entre 80% et 90% | Figure 6 |

Les informations contenues dans la base de données sont issues de mesures expérimentales ou de calculs théoriques.

Lorsqu'une interface de la base de données entre la gaine externe 30 et un milieu M présente un coefficient de réflexion sensiblement égal au coefficient de réflexion déterminé lors de l'étape 130 et une polarité identique à la polarité déterminée lors de l'étape 130, le milieu M de la deuxième interface est considéré identique au milieu de l'interface de la base de données. Ainsi, le milieu M est déterminé. Si le milieu M est l'eau, l'espace annulaire 33 de la conduite flexible 2 est considéré inondé au niveau de la région contrôlée de la gaine externe 30. Par l'expression « sensiblement égal », il est entendu égal avec une incertitude de 5 %.

L'étape de détermination 140 est mise en œuvre par l'unité de traitement 64 du calculateur 54.

Le procédé de contrôle comprend, ensuite, une étape de déplacement 150 de la sonde 50 sur la conduite flexible 2 en fonction du pas de balayage du support mobile 52. Une telle étape de déplacement 150 permet, ainsi, à la sonde 50 d'avoir accès à différentes régions de la conduite flexible 2. Le balayage est effectué axialement le long de la conduite flexible 2 selon l'axe X-X' et/ou angulairement autour de la conduite flexible 2, c'est-à-dire que la sonde 50 tourne autour de la conduite flexible 2.

L'étape de déplacement 150 est mise en œuvre par le support mobile 52.

Puis, le procédé de contrôle comprend, pour chaque région de la conduite flexible 2 balayée par la sonde 50, la répétition des étapes d'envoi 110, de réception 120, d'analyse 130 et de détermination 140. Ainsi, pour chaque région à contrôler de la gaine externe 30, le milieu M dans l'espace annulaire 33, entre la surface interne 32 de la gaine externe 30 et la deuxième couche d'armures 25 en regard de la région à contrôler de la gaine externe 30, est déterminé.

Ainsi, le procédé de contrôle permet de déterminer le niveau d'inondation de l'espace annulaire 33 d'une conduite flexible 2 tout le long de la conduite 2 et quelle que soit la pression extérieure appliquée à la conduite 2.

En particulier, dans le cas où la pression de couplage entre la gaine externe 30 et les couches d'armures externes 24, 25 dépasse quelques dizaines de bars, le procédé permet de distinguer de manière fiable un annulaire sec d'un annulaire inondé.

Le procédé de contrôle est, en outre, non intrusif et simple à mettre en œuvre.

En variante, la conduite flexible 2 comporte une couche intermédiaire entre la gaine externe 30 et la deuxième couche d'armures 25. La couche intermédiaire est, par exemple, une couche de scotch ou de colle. Dans ce cas, le signal réfléchi analysé est le signal à l'interface entre la surface interne 32 de la région à contrôler et l'espace annulaire 33 dans lequel se trouve la couche intermédiaire.

Le procédé de contrôle étant non intrusif, il est propre à être mis en œuvre lors de l'utilisation de la ligne flexible, sans interrompre son utilisation, par exemple, lors du transport de fluide à travers le passage central 16.

## Revendications

1. Procédé de contrôle d'une ligne flexible (2) comprenant au moins une couche d'armures (24, 25) entourée d'une gaine externe (30), la gaine externe (30) délimitant un espace interne (33) recevant la couche d'armures (24, 25) et comprenant au moins un milieu (M) à l'interface entre la gaine externe (30) et l'espace interne (33), le procédé comprenant :
- l'envoi (110) d'un signal ultrasonore depuis l'extérieur de la gaine externe (30) sur une région à contrôler de la gaine externe (30),
- la réception (120) du signal réfléchi (R) à l'interface entre la région à contrôler de la gaine externe (30) et l'espace interne (33) en regard de la région à contrôler de la gaine externe (30),
**caractérisé en ce que** le procédé comprend, en outre, l'analyse (130) de la polarité du signal réfléchi (R) à l'interface et la détermination (140), en fonction de la polarité analysée, d'au moins la nature du milieu (M) à l'interface.

2. Procédé de contrôle selon la revendication 1, dans lequel, lors de l'étape d'analyse (130), le signal réfléchi (R) est non redressé.

3. Procédé de contrôle selon la revendication 1 ou 2, dans lequel le procédé comporte, en outre, le balayage (150) d'une pluralité de régions à contrôler successives de la gaine externe (30) et la répétition, pour chaque région à contrôler de la gaine externe (30), des étapes d'envoi (110), de réception (120), d'analyse (130) et de détermination (140) du milieu (M) à l'interface entre la région à contrôler de la gaine externe (30) et l'espace interne (33) en regard de la région à contrôler de la gaine externe (30).

4. Procédé de contrôle selon la revendication 3, dans lequel le pas de balayage est compris entre 0 millimètre et 10 millimètres et avantageusement entre 0 millimètre et 2 millimètres.

5. Procédé de contrôle selon l'une quelconque des revendications 3 ou 4, dans lequel le balayage (150) est effectué axialement le long de la ligne flexible (2) et/ou angulairement autour de la ligne flexible (2).

6. Procédé de contrôle selon l'une quelconque des revendications précédentes, dans lequel le signal ultrasonore envoyé présente une fréquence centrale choisie entre 1,5 MHz et 5 MHz, préférentiellement entre 2 MHz et 2,5 MHz.

7. Procédé de contrôle selon l'une quelconque des revendications précédentes, dans lequel le signal ultrasonore est envoyé sous forme d'un faisceau ultrasonore focalisé.

8. Procédé de contrôle selon l'une quelconque des revendications précédentes, dans lequel le signal ultrasonore est envoyé et réceptionné par un capteur piézo-électrique.

9. Procédé de contrôle selon l'une quelconque des revendications précédentes, dans lequel, lors de l'étape de détermination (140), le signal réfléchi (R) est comparé à une base de données de signaux ultrasonores.

10. Procédé de contrôle selon l'une quelconque des revendications précédentes, dans lequel la ligne flexible (2) comporte une couche intermédiaire entre la gaine externe (30) et la couche d'armures (24, 25).

11. Procédé de contrôle selon l'une quelconque des revendications précédentes, dans lequel la ligne flexible (2) est une conduite flexible comprenant une gaine de pression (20), la gaine externe (30) et la gaine de pression (20) délimitant un espace annulaire (33) formant l'espace interne recevant la couche d'armures (24, 25).

12. Procédé de contrôle selon la revendication 11, dans lequel lorsque le milieu (M) déterminé est l'eau, l'espace annulaire (33) est considéré inondé au niveau de la région à contrôler de la gaine externe (30), le procédé comprenant, de préférence, la détermination d'un niveau d'inondation de l'espace annulaire (33).

13. Procédé de contrôle selon l'une quelconque des revendications précédentes, dans lequel la ligne flexible (2) est immergée dans une étendue d'eau.

14. Procédé de contrôle selon l'une quelconque des revendications précédentes, comprenant en outre (130) : la détermination d'une amplitude du signal réfléchi (R) à l'interface ; et le calcul du rapport entre l'amplitude du signal réfléchi et une amplitude du signal ultrasonore envoyé ;
la détermination (140) d'au moins la nature du milieu (M) à l'interface étant ensuite effectuée en fonction de la polarité analysée et du rapport des amplitudes calculé.

15. Installation (10) de contrôle d'une ligne flexible (2) comprenant au moins une couche d'armures (24, 25) entourée d'une gaine externe (30), la gaine externe (30) délimitant un espace interne (33) recevant la couche d'armures (24, 25) et comprenant au moins un milieu (M) à l'interface entre la gaine externe (30) et l'espace interne (33), l'installation comprenant :
- une sonde (50) propre à envoyer un signal ultrasonore sur une région à contrôler de la gaine externe (30) et à recevoir le signal réfléchi (R) à l'interface entre la région à contrôler de la gaine externe (30) et l'espace interne (33) en regard de la région à contrôler de la gaine externe (30), **caractérisée en ce qu'**elle comprend:
- une unité de traitement de données (64) configurée pour : déterminer une amplitude du signal réfléchi (R) à l'interface ; calculer un rapport entre l'amplitude du signal réfléchi et une amplitude du signal ultrasonore envoyé ; analyser (130) la polarité du signal réfléchi (R) à l'interface ; et déterminer (140), en fonction de la polarité analysée et du rapport des amplitudes calculé, au moins la nature du milieu (M) à l'interface ;
l'installation de contrôle étant configurée pour la mise en œuvre d'un procédé de contrôle selon la revendication 14.

## Patentansprüche

1. Verfahren zum Überprüfen einer flexiblen Leitung (2), welche mindestens eine Schicht aus Verstärkungen (24, 25), welche durch eine äußere Hülle (30) umgeben ist, aufweist, wobei die äußere Hülle (30) einen inneren Raum (33) begrenzt, welcher die Schicht aus Verstärkungen (24, 25) aufnimmt und mindestens ein Medium (M) an der Grenzfläche zwischen der äußeren Hülle (30) und dem inneren Raum (33) aufweist, wobei das Verfahren aufweist:
- das Senden (110) eines Ultraschallsignals von der Außenseite der äußeren Hülle (30) auf einen zu überprüfenden Bereich der äußeren Hülle (30),
- das Empfangen (120) eines Signals (R), welches an der Grenzfläche zwischen dem zu überprüfenden Bereich der äußeren Hülle (30) und dem inneren Raum (33), welcher dem zu überprüfenden Bereich der äußeren Hülle (30) gegenüberliegt, reflektiert wird,
**gekennzeichnet dadurch, dass** das Verfahren ferner das Analysieren (130) der Polarität des an der Grenzfläche reflektierten Signals (R) und das Ermitteln (140) von mindestens der Beschaffenheit des Mediums (M) an der Grenzfläche in Abhängigkeit von der analysierten Polarität aufweist.

2. Verfahren zum Überprüfen gemäß dem Anspruch 1, wobei, bei dem Schritt des Analysierens (130), das reflektierte Signal (R) nicht gleichgerichtet wird.

3. Verfahren zum Überprüfen gemäß dem Anspruch 1 oder 2, wobei das Verfahren ferner aufweist das Abtasten einer Mehrzahl von zu überprüfenden aufeinanderfolgenden Bereichen der äußeren Hülle (30) und das Wiederholen, für jeden zu überprüfenden Bereich der äußeren Hülle (30), der Schritte des Sendens (110), des Empfangens (120), des Analysierens (130) und des Ermittelns (140) des Mediums an der Grenzfläche zwischen dem zu überprüfenden Bereich der äußeren Hülle (30) und dem inneren Raum (33), welcher dem zu überprüfenden Bereich der äußeren Hülle (30) gegenüberliegt.

4. Verfahren zum Überprüfen gemäß dem Anspruch 3, wobei der Abtastschritt zwischen 0 Millimeter und 10 Millimeter und vorteilhafterweise zwischen 0 Millimeter und 2 Millimeter liegt.

5. Verfahren zum Überprüfen gemäß irgendeinem der Ansprüche 3 oder 4, wobei das Abtaten (150) axial entlang der flexiblen Leitung (2) und/oder winkelmäßig um die flexible Leitung (2) herum durchgeführt wird.

7. Verfahren zum Überprüfen gemäß irgendeinem der vorhergehenden Ansprüche, wobei das Ultraschallsignal in Form eines fokussierten Ultraschallstrahls gesendet wird.

8. Verfahren zum Überprüfen gemäß irgendeinem der vorhergehenden Ansprüche, wobei das Ultraschallsignal durch einen piezoelektrischen Sensor gesendet und empfangen wird.

9. Verfahren zum Überprüfen gemäß irgendeinem der vorhergehenden Ansprüche, wobei, beim dem Schritt des Ermittelns (140), das reflektierte Signal (R) mit einer Datenbank von Ultraschallsignalen verglichen wird.

10. Verfahren zum Überprüfen gemäß irgendeinem der vorhergehenden Ansprüche, wobei die flexible Leitung (2) eine Zwischenschicht zwischen der äußeren Hülle (30) und der Schicht aus Verstärkungen (24, 25) aufweist.

11. Verfahren zum Überprüfen gemäß irgendeinem der vorhergehenden Ansprüche, wobei die flexible Leitung (2) eine flexible Rohrleitung, welche eine Druckhülle (20) aufweist, ist, wobei die äußere Hülle (30) und die Druckhülle (20) einen ringförmigen Raum (33), welcher den inneren Raum, der die Schicht aus Verstärkungen (24, 25) aufnimmt, bildet, begrenzen.

12. Verfahren zum Überprüfen gemäß dem Anspruch 11, wobei, wenn das ermittelte Medium (M) Wasser ist, der ringförmigen Raum (33) auf Höhe des zu überprüfenden Bereichs der äußeren Hülle (30) als geflutet angesehen wird, wobei das Verfahren vorzugsweise das Ermitteln eines Stands der Überflutung des ringförmigen Raum (33) aufweist.

13. Verfahren zum Überprüfen gemäß irgendeinem der vorhergehenden Ansprüche, wobei die flexible Leitung (2) in einem Gewässer versenkt ist.

14. Verfahren zum Überprüfen gemäß irgendeinem der vorhergehenden Ansprüche, ferner aufweisend (130): das Ermitteln einer Amplitude des an der Grenzfläche reflektierten Signals (R), und das Berechnen eines Verhältnisses zwischen der Amplitude des reflektierten Signals und einer Amplitude des gesendeten Ultraschallsignals,
wobei das Ermitteln (140) von mindestens der Beschaffenheit des Mediums (M) an der Grenzfläche anschließend in Abhängigkeit von der analysierten Polarität und dem berechneten Verhältnis der Amplituden durchgeführt wird.

15. Einrichtung (10) zum Überprüfen einer flexiblen Leitung (2), welche mindestens eine Schicht aus Verstärkungen (24, 25), welche durch eine äußere Hülle (30) umgeben ist, aufweist, wobei die äußere Hülle (30) einen inneren Raum (33) begrenzt, welcher die Schicht aus Verstärkungen (24, 25) aufnimmt und mindestens ein Medium (M) an der Grenzfläche zwischen der äußeren Hülle (30) und dem inneren Raum (33) aufweist, wobei die Einrichtung aufweist:
- eine Sonde (50), welche dazu geeignet ist, ein Ultraschallsignal auf einen zu überprüfenden Bereich der äußeren Hülle (30) zu senden und ein Signal (R), welches an der Grenzfläche zwischen dem zu überprüfenden Bereich der äußeren Hülle (30) und dem inneren Raum (33), welcher dem zu überprüfenden Bereich der äußeren Hülle (30) gegenüberliegt, reflektiert wird, zu empfangen,
**gekennzeichnet dadurch, dass** sie aufweist:
eine Datenverarbeitungseinheit (64), welche dazu eingerichtet ist: eine Amplitude des an der Grenzfläche reflektierten Signals (R) zu ermitteln, ein Verhältnis zwischen der Amplitude des reflektierten Signals und einer Amplitude des gesendeten Ultraschallsignals zu berechnen, die Polarität des an der Grenzfläche reflektierten Signals (R) zu analysieren und mindestens die Beschaffenheit des Mediums (M) an der Grenzfläche in Abhängigkeit von der analysierten Polarität und dem berechneten Verhältnis der Amplituden zu ermitteln,
wobei die Einrichtung (10) zum Überprüfen dazu eingerichtet ist, ein Verfahren zum Überprüfen gemäß dem Anspruch 14 durchzuführen.

## Claims

1. A method for checking a flexible line (2) comprising at least one layer of armors (24, 25) surrounded with an external sheath (30), the external sheath (30) delimiting an internal space (33) receiving the layer of armors (24, 25) and comprising at least one medium (M) at the interface between the external sheath (30) and the internal space (33), the method comprising:
- the sending (110) of an ultrasonic signal from the outside of the external sheath (30) on a region to be checked of the external sheath (30),
- the reception (120) of the reflected signal (R) at the interface between the region to be checked of the external sheath (30) and the internal space (33) facing the region to be checked of the external sheath (30),
**characterized in that** the method further comprises the analysis (130) of the polarity of the reflected signal (R) at the interface and the determination (140), depending on the analyzed polarity, of at least the nature of the medium (M) at the interface.

2. The checking method according to claim 1, wherein during the analysis step (130), the reflected signal (R) is not rectified.

3. The checking method according to claim 1 or 2, wherein the method further includes, the scanning (150) of a plurality of regions to be successively checked of the external sheath (30) and the repetition, for each region to be checked of the external sheath (30), of the sending (110), receiving (120), analysis (130) steps and for determining (140) the medium (M) at the interface between the region to be checked of the external sheath (30) and the internal space (33) facing the region to be checked of the external sheath (30).

4. The checking method according to claim 3, wherein the scanning pitch is comprised between 0 millimeter and 10 millimeters and advantageously between 0 millimeter and 2 millimeters.

5. The checking method according to any one of claims 3 or 4, wherein the scanning (150) is carried out axially along the flexible line (2) and/or angularly around the flexible line (2).

6. The checking method according to any one of the preceding claims, wherein the sent ultrasonic signal has a central frequency selected between 1.5 MHz and 5 MHz, preferentially between 2 MHz and 2.5 MHz.

7. The checking method according to any one of the preceding claims, wherein the ultrasonic signal is sent as a focused ultrasonic beam.

8. The checking method according to any one of the preceding claims, wherein the ultrasonic signal is sent and received by a piezo-electric sensor.

9. The checking method according to any one of the preceding claims, wherein, during the determination step (140), the reflected signal (R) is compared with a database of ultrasonic signals.

10. The checking method according to any one of the preceding claims, wherein the flexible line (2) includes an intermediate layer between the external sheath (30) and the layer of armors (24, 25).

11. The checking method according to any one of the preceding claims, wherein the flexible line (2) is a flexible conduit comprising a pressure sheath (20), the external sheath (30) and the pressure sheath (20) delimiting an annular space (33) forming the internal space receiving the layer of armors (24, 25).

12. The checking method according to claim 11, wherein when the determined medium (M) is water, the annular space (33) is considered to be flooded at the region to be checked of the external sheath (30), the method preferably comprising the determination of a flooding level of the annular space (33).

13. The checking method according to any of the preceding claims, wherein the flexible line (2) is immersed in an extend of water.

14. The checking method according to any of the preceding claims, also comprising (130) : determining an amplitude of the reflected signal (R) at the interface ; and calculating the ratio between the amplitude of the reflected signal and an amplitude of the sent ultrasonic signal ; the determination (140) of at least the nature of the medium (M) at the interface being then carried out depending on the analyzed polarity and on the calculated amplitude ratio.

15. An installation (10) for checking a flexible line (2) comprising at least one layer of armors (24, 25) surrounded with an external sheath (30), the external sheath (30) delimiting an internal space (33) receiving the layer of armors (24, 25) and comprising at least one medium (M) at the interface between the external sheath (30) and the internal space (33), the installation comprising:
- a probe (50) capable of sending an ultrasonic signal onto a region to be checked of the external sheath (30) and of receiving the reflected signal (R) at the interface between the region to be checked of the external sheath (30) and the internal space (33) facing the region to be checked of the external sheath (30), and
- a data processing unit (64) configured for : determining an amplitude of the reflected signal (R) at the interface ; calculating a ratio between the amplitude of the reflected signal and an amplitude of the sent ultrasonic signal ; analyzing (130) the polarity of the reflected signal (R) at the interface ; and determining (140), depending on the analyzed polarity and on the calculated amplitude ratio, at least the nature of the medium (M) at the interface ; the checking installation being configured for implementing a checking method according to claim 14.
